# EUROPÄISCHE PATENTSCHRIFT

(11) **EP 3 883 986 B1**
(45) Veröffentlichungstag und Bekanntmachung des Hinweises auf die Patenterteilung: **17.01.2024**
(21) Anmeldenummer: 19805241.7
(22) Anmeldetag: 14.11.2019
(51) Int. Cl.: C08G 69/16, C08K 5/00, C08K 5/3435, C08K 5/524

(54) **VERFAHREN ZUR HERSTELLUNG VON POLYAMID 6**
PROCESS FOR PREPARING POLYAMIDE 6
PROCÉDÉ DE PRODUCTION DE POLYAMIDE 6

(30) Priorität: 20.11.2018 DE 102018219827; 29.11.2018 DE 102018220616
(43) Veröffentlichungstag der Anmeldung: 29.09.2021
(73) Patentinhaber: Uhde Inventa-Fischer GmbH, 13509 Berlin (DE); thyssenkrupp AG, 45143 Essen (DE)
(72) Erfinder: HIMMEL, Tobias, 13583 Berlin (DE)
(74) Vertreter: thyssenkrupp Intellectual Property GmbH
(86) Internationale Anmeldenummer: PCT/EP2019/081298
(87) Internationale Veröffentlichungsnummer: WO 2020/104286

(56) Entgegenhaltungen:
- EP-A1- 0 363 628
- EP-A2- 1 010 713
- CN-A- 107 698 771
- DE-A1- 19 854 498

## Beschreibung

Die vorliegende Erfindung betrifft ein Verfahren zur Herstellung von Polyamid 6 durch hydrolytische Polymerisation von Caprolactam. Das über dieses Verfahren hergestellte Polyamid 6 weist eine inhärente Stabilisierung gegen Hitze und Licht auf und ist für die Herstellung von Fasern und Folien geeignet. Weiterhin betrifft die vorliegende Erfindung Fasern und Folien, die aus dem über das erfindungsgemäßen Verfahren hergestellten Polyamid 6 versponnen bzw. extrudiert wurden und die Verwendung dieses Polyamids zur Herstellung von Fasern und Folien.

Seit Jahrzehnten werden Polyamide industriell in stetig wachsenden Mengen produziert, da die technischen Eigenschaften dieser Kunststoffgruppe sie zu einem vielseitigen Werkstoff machen. Auf Grund ihrer mechanischen Festigkeit sind sie insbesondere für den Einsatz zur Herstellung von Fasern oder Folien geeignet.

Bei der Herstellung von Fasern ist es besonders bedeutsam, dass das Polyamid eine enge Molmassenverteilung aufweist. Ebenso wichtig ist, dass die Faser eine gute Anfärbbarkeit sowie Hitze- und Lichtstabilität aufweist. All diese Eigenschaften können durch Zusatz geeigneter Additive während der Polyamidsynthese verbessert werden.

Die Synthese von Polycaprolactam (PA 6) wird heutzutage kontinuierlich über sogenannte VK-Rohre ("vereinfacht kontinuierlich") einstufig oder zweistufig ausgeführt. Dazu wird der Rohstoff Caprolactam mit 1 bis 5 Gew.-% Wasser vermischt und aufgeheizt. Das Caprolactam wird dafür flüssig bei einer Temperatur von etwa 90°C vorgelegt. Die Mischung wird anschließend mit einer Temperatur von 120 bis 140°C dem kontinuierlichen Prozess zugeführt. Das Wasser wird zur Ringöffnung des Caprolactams benötigt, muss danach aber wieder abdestilliert werden.

Am Kopf des VK-Rohres werden der Wassergehalt, eine Temperatur von 250 bis 280°C und der Druck für den weiteren Reaktionsverlauf vorgegeben. Die Reaktionsmasse bewegt sich anschließend im VK-Rohr idealerweise als Pfropfenströmung nach unten, wobei sich über die Verweilzeit im VK-Rohr der Reaktionsfortschritt derart einstellt, dass am Ende des VK-Rohrs die Reaktion in der Schmelzephase abgeschlossen ist. Die Schmelze wird über geeignete Granuliersysteme gekühlt und geschnitten.

Aufgrund eines sich einstellenden chemischen Gleichgewichts, verbleiben etwa 10 % des Caprolactams in der Schmelze. Über eine Heißwasserextraktion wird diese verbliebene Rohstoffmenge ausgewaschen. Das Waschwasser wird so aufkonzentriert, dass das darin enthaltene Caprolactam wieder zur erneuten Reaktion dem Prozess zur Verfügung gestellt werden kann. Die extrahierten Polyamidchips werden anschließend unter einer Stickstoffatmosphäre getrocknet und gegebenenfalls noch weiter in der festen Phase aufkondensiert (SSP - solid state postcondensation).

Die fertigen Polyamidchips werden in geeigneter Weise zwischengelagert, bevor sie zu textilen Fäden oder Folien weiterverarbeitet werden. Neben der Verwendung eines einzelnen VK-Rohrs, kann ebenso eine vorgeschaltete Druckstufe in einem dann zweistufigen Verfahren eingesetzt werden. Weiterhin kann Polycaprolactam in einem Batch-Prozess in einem Autoklaven synthetisiert werden. Beschrieben sind diese Verfahren beispielsweise in "Kunststoff Handbuch 3/4, Polyamide, Becker/Braun, Carl Hanser Verlag München Wien, 1998".

Die Breite der Molmassenverteilung stellt sich im Laufe der Reaktion, durch die Zugabe eines geeigneten Kettenlängenreglers zu den Rohstoffen, ein. Bekannte Kettenlängenregler sind mono- oder bifunktionelle Dicarbonsäuren.

Eine weitere Additivierung der Reaktionsmaße ist insoweit vorteilhaft, da die hergestellten Chips im Zuge der Weiterverarbeitung lediglich über eine Extrusionsanlage aufgeschmolzen werden müssen und der gewünschten Extrusionsdüse zugeführt werden. Weitere Anlagenausrüstungen zur nachträglichen Additivierung entfallen.

Der Gesamtprozess der hydrolytischen Polymerisation von Caprolactam besitzt somit eine hohe Wertschöpfung und Wirtschaftlichkeit.

Dem Stand der Technik nach werden die Additive in einem dem VK-Rohr vorgeschalteten Lagertank zusammen mit dem Caprolactam vermischt. Siehe hierzu auch "Nylon Plastics Handbook, M. I. Kohan, Hanser Publishers, Munich Vienna New York, 1995". Eine nähere Ausführung über die Zugabe von Additiven wird nicht offenbart.

WO 97/13800 A1 betrifft hydrolytisch polymerisiertes Polycaprolactam, hergestellt mit einer Kettenregelung, wobei die Polymerisation des Caprolactams zusammen mit 0.1 bis 0.7 Gew.-% einer aromatischen Dicarbonsäure, 0 bis 0.7 Gew.-%. eines aliphatischen oder cycloaliphatischen Diamins, das eine primäre oder tertiäre Aminogruppe aufweist und/oder 0.01 bis 0.7 Gew.-% von 4-Amino-2,2,6,6-tetraalkylpiperidin erfolgt.

In der Literatur findet sich ein ganze Reihe von weiteren möglichen Stabilisatoren gegen Licht- und Hitzeschädigung von Kunststoffen, so zum Beispiel im "Handbuch Kunststoff Additive, R. Maier, M. Schiller, Carl Hanser Verlag, München, 1998".

DE 10 2015 224 537 A1 beschreibt ein Verfahren zur Herstellung von Partikeln enthaltend wenigstens ein Polyamid, wobei wenigstens eine Vorläuferverbindung des wenigstens einen Polyamids in einem nicht wässrigen Dispersionsmittel in Gegenwart von wenigstens einem, gegebenenfalls organisch modifizierten, anorganischen Stabilisator bei einer Temperatur von 240 bis 350°C zur Reaktion gebracht wird.

EP 3 222 649 A1 offenbart eine Polyamid-Formmasse bestehend aus den folgenden Bestandteilen (A)-(F): (A) 40 bis 70 Gew.-% mindestens eines teilkristallinen, teilaromatischen Polyamids, aufgebaut aus: (a1) 60 bis 75 Gew.-% 6T-Einheiten, gebildet aus 1,6-Hexandiamin und Terephthalsäure; (a2) 20 bis 35 Gew.-% 61-Einheiten, gebildet aus 1,6-Hexandiamin und Isophthalsäure; (a3) 3 bis 15 Gew.-% 612-Einheiten, gebildet aus 1,6-Hexandiamin und Dodecandisäure; (a4) 0 bis 5 Gew.-% einer der folgenden Einheiten: 66-Einheiten, gebildet aus 1,6-Hexandiamin und Adipinsäure; 68-Einheiten, gebildet aus 1,6-Hexandiamin und Korksäure; 69-Einheiten gebildet aus 1,6-Hexandiamin und Azelainsäure; 610-Einheiten gebildet aus 1,6-Hexandiamin und Sebacinsäure; 6-Einheiten gebildet aus ε-Caprolactam; oder einer Mischung derartiger Einheiten; wobei die Summe der Komponenten (a1) bis (a4) 100 Gew.-% des Polyamids (A) ausmacht; (B) 30 bis 60 Gew.-% faserförmige Verstärkungsstoffe; (C) 0 bis 30 Gew.-% partikuläre Füllstoffe verschieden von (B), (D) und (E)); (D) 0 bis 2.0 Gew.-% Hitzestabilisatoren; (E) 0 bis 6 Gew.-% Hilfsstoffe und/oder Additive, verschieden von (A)-(D); wobei die Summe der Komponenten (A)-(E) 100 Gew.-% ausmacht, sowie zugehörige Formkörper und Verwendungen von derartigen Formkörpern insbesondere als Hohlkörper für den Kontakt mit Kühlflüssigkeit im Automobilbereich.

EP 3 263 639 A1 betrifft die Verwendung einer Additivzusammensetzung zur Herstellung von Polykondensationspolymeren, wobei diese Additivzusammensetzung auf einem spezifischen Phenyldicarbonsäureamid und einer oder mehreren sterisch gehinderten organischen Phosphor(III)-verbindungen besteht.

EP 2 128 198 A1 betrifft ein Verfahren zur Herstellung von Polyamiden unter Verwendung eines Mehrkomponentenadditivsystems, welches den Polykondensationsgrad sowie die molekulare Verteilungsbreite reguliert und gleichzeitig das Polymer während der Verarbeitung gegen Hitze und Licht schützt. Das Verfahren erfolgt in Gegenwart von Carbonsäuren, Diamiden sowie alkylsubstituierten Phenolen und/oder Thiolen.

WO 2018/114708 A1 beschreibt ein Verfahren zur Erniedrigung der Kristallisationstemperatur von teilkristallinen Polyamiden mit mindestens einem umesterungsfähigen organischen Phosphit, organischen Phosphonit, organischen Phosphat oder Mischungen davon.

Weitere Verfahren zur Herstellung von Polyamid 6 sind bekannt aus EP 0 363 628 A1, CN 107 698 771 A, DE 198 54 498 A1 und EP 1 010 713 A2.

Die im Stand der Technik beschriebenen Verfahren und Additive bzw. Additivmischungen weisen jedoch einige Einschränkungen und Nachteile auf.

Bei der Verarbeitung zu textilen Fasern im Hochgeschwindigkeitsspinnen und mit besonders hohen Faserfeinheiten können fest eingebaute Stabilisatormoleküle als Störstellen für die Orientierung der Polyamid-Ketten wirken und einen Faserbruch hervorrufen. Gleiches gilt bei der Verarbeitung zu Folien über Hochgeschwindgkeitsextrusion. Außerdem kann während der Verarbeitung eine Viskositätserhöhung auftreten.

Andere Additive hingegen sind kompatibel zur Polyamid-Matrix, aber nicht beständig in der hydrolytischen Polymerisation. Qualitativ äußert sich dies darin, dass das synthetisierte PA 6 entweder vergilbt oder pink verfärbt aus dem Schritt der Heißwasserextraktion hervorgeht. Diese Verfärbungen machen das Material unbrauchbar für die weitere Verarbeitung.

Eine kontinuierliche PA 6 - Anlage, die dem heutigen Stand der Technik entspricht, erzeugt etwa 200 t PA 6 Granulat pro Tag. Die Verweilzeit von der Aufgabe der Rohstoffe bis zum fertigen Granulat liegt dabei im Zeitraum von 2 bis 3 Tagen. Eine Additivierung mit Materialien, die sich, entgegen der Erwartungen des Fachmanns, als qualitätsmindernd auswirken, führt daher zu immensen Ausschussmengen und muss ausgeschlossen werden.

Ausgehend davon war es Aufgabe der vorliegenden Erfindung für die kontinuierliche hydrolytische Polymerisation Erfindung bereit zu stellen, welches es erlaubt inhärent hitze- und lichtstabilisierte PA 6 kostengünstig herzustellen, welches darüber hinaus über Hochgeschwindigkeitsspinnen und Folienextrusion weiter verarbeitet werden kann, ohne dass eine signifikante Vergilbung auftritt oder eine Viskositätserhöhung beobachtet wird. Weiterhin soll das erhaltene PA 6 eine enge Molmassenverteilung aufweisen und Fasern aus diesem Polyamid sollen gut anfärbbar sein.

Diese Aufgabe wurde durch das Verfahren zur Herstellung von PA 6 durch hydrolytische Polymerisation von Caprolactam mit den Merkmalen von Patentanspruch 1 gelöst, welches die folgenden Schritte umfasst.
i) Bereitstellen mindestens eines bifunktionellen Kettenlängenreglers gelöst in Caprolactam;
ii) Bereitstellen mindestens eines Phosphitstabilisators gelöst in Caprolactam;
iii) Zugabe der in Schritt (i) und (ii) bereitgestellten Komponenten zu einer Mischung aus Wasser und Caprolactam;
iv) Zugabe mindestens einer Verbindung mit genau einer primären Aminogruppe vor, während oder nach Schritt iii) zu der Mischung aus Wasser und Caprolactam;
v) Polymerisation der Mischung zu PA 6;
wobei die in Schritt i) und ii) bereitgestellten Lösungen erst bei der Zugabe gemäß Schritt iii) miteinander vermischt werden.

Gemäß dem erfindungsgemäßen Verfahren ist der mindestens eine bifunktionelle Kettenlängenregler ausgewählt aus der Gruppe bestehend aus aliphatischen Dicarbonsäuren und aromatischen Dicarbonsäuren. Ferner sieht die vorliegende Erfindung vor, dass die mindestens eine Verbindung mit genau einer primären Aminogruppe 4-Amino-2,2,6,6-tetramethyl-piperidin ist.

Bevorzugte Ausführungsformen des erfindungsgemäßen Verfahrens werden in den Unteransprüchen angegeben.

Eine bevorzugte Ausführungsform des erfindungsgemäßen Verfahrens sieht vor, dass das Verfahren kontinuierlich durchgeführt wird.

Gemäß einer anderen bevorzugten Ausführungsform des erfindungsgemäßen Verfahrens ist der mindestens eine bifunktionelle Kettenlängenregler ausgewählt aus der Gruppe bestehend aus Phthalsäure, Isophthalsäure, Terephthalsäure und Mischungen davon, wobei Terephthalsäure bevorzugt ist.

Nach einer weiteren bevorzugten Ausführungsform des erfindungsgemäßen Verfahrens ist der mindestens eine Phosphitstabilisator ein organisches Phosphit ist, welches insbesondere ausgewählt ist aus der Gruppe bestehend aus Tris(nonylphenyl)phosphit, Tris(2,4-di-tert-butylphenyl)phosphit, 3,9-Bis(2,4-di-tert-butylphenoxy)-2,4,8,10-tetraoxa-3,9-diphosphaspiro[5.5]-undecan und Mischungen davon, wobei Tris(2,4-di-tert-butylphenyl)phosphit bevorzugt ist.

Gemäß einer anderen bevorzugten Ausführungsform des erfindungsgemäßen Verfahrens ist der mindestens eine bifunktionelle Kettenlängenregler ausgewählt aus der Gruppe bestehend aus Phthalsäure, Isophthalsäure, Terephthalsäure und Mischungen davon, wobei Terephthalsäure bevorzugt ist und der mindestens eine Phosphitstabilisator ist ein organisches Phosphit, welches insbesondere ausgewählt ist aus der Gruppe bestehend aus Tris(nonylphenyl)phosphit, Tris(2,4-di-tert-butylphenyl)phosphit, 3,9-Bis(2,4di-tert-butylphenoxy)-2,4,8,10-tetraoxa-3,9diphosphaspiro[5.5]-un-decan und Mischungen davon, wobei Tris(2,4-di-tert-butylphenyl)phosphit bevorzugt ist.

Besonders bevorzugt ist die Verwendung von Terephthalsäure und Tris(2,4-di-tert-butylphenyl)phosphit.

Eine weitere bevorzugte Ausführungsform der vorliegenden Erfindung sieht vor, dass der mindestens eine bifunktionelle Kettenlängenregler in einer Menge im Bereich von 0.05 bis 1.0 mol-% und bevorzugt im Bereich von 0.1 bis 0.5 mol-% bezogen auf die Menge des eingesetzten Caprolactams eingesetzt wird.

Nach einer anderen bevorzugten Ausführungsform vorliegender Erfindung wird der mindestens eine Phosphitstabilisator in einer Menge im Bereich von 0.01 bis 1.0 mol-% und bevorzugt im Bereich von 0.01 bis 0.05 mol-% bezogen auf die Menge des eingesetzten Caprolactams eingesetzt.

Gemäß einer weiteren bevorzugten Ausführungsform der vorliegenden Erfindung wird die mindestens eine Verbindung mit genau einer primären Aminogruppe in einer Menge im Bereich von 0.01 bis 1.0 mol-% und bevorzugt im Bereich von 0.05 bis 0.5 mol-% bezogen auf die Menge des eingesetzten Caprolactams eingesetzt.

Eine andere bevorzugte Ausführungsform der vorliegenden Erfindung sieht vor, dass der mindestens eine bifunktionelle Kettenlängenregler in einer Menge im Bereich von 0.05 bis 1.0 mol-% und bevorzugt im Bereich von 0.1 bis 0.5 mol-% bezogen auf die Menge des eingesetzten Caprolactams eingesetzt wird und der mindestens eine Phosphitstabilisator in einer Menge im Bereich von 0.01 bis 1.0 mol-% und bevorzugt im Bereich von 0.01 bis 0.05 mol-% bezogen auf die Menge des eingesetzten Caprolactams eingesetzt wird und die mindestens eine Verbindung mit genau einer primären Aminogruppe in einer Menge im Bereich von 0.01 bis 1.0 mol-% und bevorzugt im Bereich von 0.05 bis 0.5 mol-% bezogen auf die Menge des eingesetzten Caprolactams eingesetzt wird.

Nach einer anderen bevorzugten Ausführungsform vorliegender Erfindung erfolgt die Zugabe der mindestens einen Verbindung mit genau einer Amino-gruppe nach der Zugabe des mindestens einen Phosphitstabilisators und nach der Zugabe des mindestens einen bifunktionellen Kettenreglers.

Eine weitere bevorzugte Ausführungsform vorliegender Erfindung sieht vor, dass das Verfahren einstufig durchgeführt wird, wobei ein Caprolactam-Wasser Gemisch über eine Leitung einem VK-Rohr zugeführt wird und der mindestens eine Phosphitstabilisator, der mindestens eine bifunktionelle Kettenregler und die mindestens eine Verbindung mit genau einer primären Aminogruppe in je einem Ansatzbehälter vorgelegt werden und diese der Leitung, über welche das Caprolactam-Wasser Gemisch in das VK-Rohr eingespeist wird, in der Reihenfolge Phosphitstabilisator - bifunktioneller Kettenregler - Verbindung mit primärer Aminogruppe, zugeführt werden.

Nach einer weiteren bevorzugten Ausführungsform vorliegender Erfindung wird das Verfahren zweistufig durchgeführt, wobei ein Caprolactam-Wasser Gemisch über eine Leitung einem Mischbehälter zugeführt wird und der mindestens eine Phosphitstabilisator, der mindestens eine bifunktionelle Kettenregler und die mindestens eine Verbindung mit genau einer primären Amino-gruppe in je einem Ansatzbehälter vorgelegt werden und diese der Leitung, über welche das Caprolactam-Wasser Gemisch in den Mischbehälter eingespeist wird, in der Reihenfolge Phosphitstabilisator - bifunktioneller Kettenregler - Verbindung mit primärer Aminogruppe, zugeführt werden und die Mischung aus dem Mischbehälter zunächst in einen Prepolymerisationsreaktor geführt wird und das Prepolymerisat von dort in das VK-Rohr geleitet wird.

Eine andere bevorzugte Ausführungsform der vorliegenden Erfindung sieht vor, dass die Einmischung des mindestens einen Phosphitstabilisators, des mindestens einen bifunktionellen Kettenreglers und der mindestens einen Verbindung mit genau einer primären Aminogruppe in die das Caprolactam-Wasser Gemisch führende Leitung über je ein Mischelement vorgenommen wird, wobei dieses vorzugsweise nach dem Venturi-Prinzip arbeitet.

Nach einer weiteren bevorzugten Ausführungsform der vorliegenden Erfindung wird Schritt v) bei einer Temperatur im Bereich von 225 bis 280°C, bevorzugt von 240 bis 270°C und besonders bevorzugt von 250 bis 265°C durchgeführt.

Eine weitere bevorzugte Ausführungsform vorliegender Erfindung sieht vor, dass Schritt v) bei einstufiger Verfahrensführung bei einem absoluten Druck im VK-Rohr im Bereich von 0.5 bis 1.2 bar, bevorzugt von 0.6 bis 1.1 bar und besonders bevorzugt von 0.7 bis 1.0 bar durchgeführt wird oder Schritt v) bei zweistufiger Verfahrensführung bei einem absoluten Druck im Prepolymerisationsreaktor im Bereich von 1 bis 6 bar, bevorzugt von 2 bis 5 bar und besonders bevorzugt von 2.5 bis 4 bar und einem absoluten Druck im VK-Rohr im Bereich von 0.5 bis 1.2 bar, bevorzugt von 0.6 bis 1.1 bar und besonders bevorzugt von 0.7 bis 1.0 bar durchgeführt wird.

Gemäß einer anderen bevorzugten Ausführungsform der vorliegenden Erfindung wird Schritt v) durchgeführt bis das erhaltene PA 6 eine relative Viskosität im Bereich von 2.2 bis 3.0, bevorzugt von 2.4 bis 2.8 und besonders bevorzugt von 2.4 bis 2.7 aufweist.

Nach einer weiteren bevorzugten Ausführungsform der vorliegenden Erfindung wird Schritt v) bei einer Temperatur im Bereich von 225 bis 280°C, bevorzugt von 240 bis 270°C und besonders bevorzugt von 250 bis 265°C durchgeführt und Schritt v) wird bei einstufiger Verfahrensführung bei einem absoluten Druck im VK-Rohr im Bereich von 0.5 bis 1.2 bar, bevorzugt von 0.6 bis 1.1 bar und besonders bevorzugt von 0.7 bis 1.0 bar durchgeführt oder Schritt v) wird bei zweistufiger Verfahrensführung bei einem absoluten Druck im Prepolymerisationsreaktor im Bereich von 1 bis 6 bar, bevorzugt von 2 bis 5 bar und besonders bevorzugt von 2.5 bis 4 bar und einem absoluten Druck im VK-Rohr im Bereich von 0.5 bis 1.2 bar, bevorzugt von 0.6 bis 1.1 bar und besonders bevorzugt von 0.7 bis 1.0 bar durchgeführt und Schritt v) wird durchgeführt bis das erhaltene PA 6 eine relative Viskosität im Bereich von 2.2 bis 3.0, bevorzugt von 2.4 bis 2.8 und besonders bevorzugt von 2.4 bis 2.7 aufweist.

Die relative Viskosität wird dabei als Lösungsviskosität von 1 g Polyamid in 100 ml 96 %iger Schwefelsäure bei 25°C bestimmt. Die Bestimmung erfolgt gemäß ISO 307 (2007), die Berechnung der relativen Viskosität (RV) nach RV = t/to erfolgte in Anlehnung an Abschnitt 11 der Norm.

Eine andere bevorzugte Ausführungsform vorliegender Erfindung sieht vor, dass der Yellow-Index des PA 6 nach Schritt v) im Bereich von 0.2 bis 5, bevorzugt von 0.5 bis 4 und besonders bevorzugt von 0.5 bis 3 liegt.

### Beschreibung der Figuren

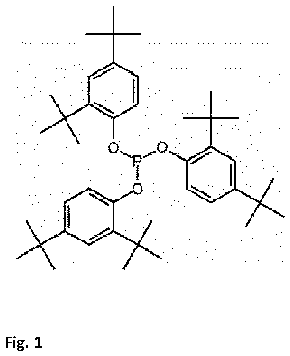

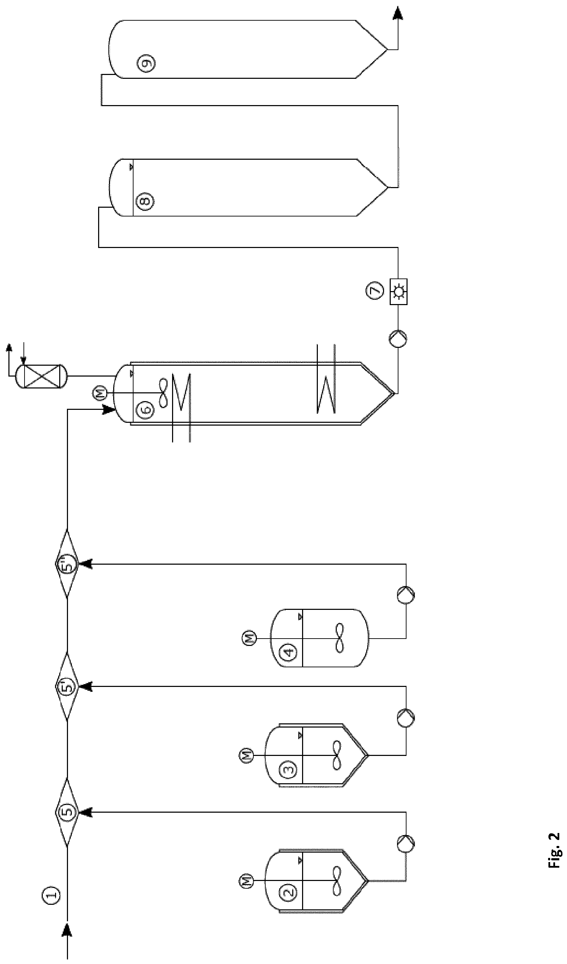

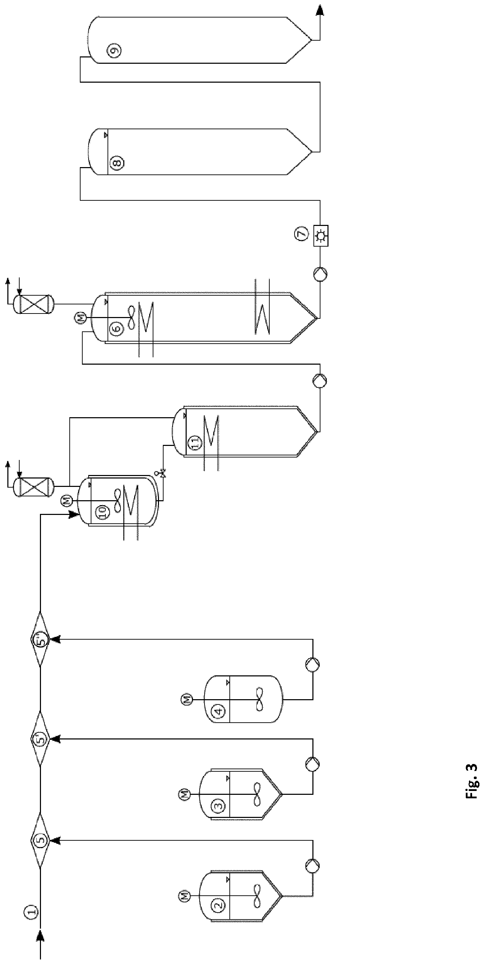

Figur 1 zeigt die Strukturformel des erfindungsgemäßen Phosphitstabilisators Irgafos^{®} 168. Figur 2 zeigt eine Vorrichtung zur einstufigen Durchführung des erfindungsgemäßen Verfahrens, eine Vorrichtung zur zweistufigen Durchführung des Verfahrens nach vorliegender Erfindung wird in Figur 3 abgebildet.

Die hydrolytische Polymerisation wird gemäß der in Figur 2 gezeigten Vorrichtung in einem VK-Rohr (6) durchgeführt. Dabei wird diesem das Caprolactam/Wasser-Gemisch über eine Leitung (1) zugeführt. Der bifunktionelle Kettenregler und der Phosphitstabilisator werden dabei in Caprolactam gelöst in den Ansatzbehältern (2) und (3) vorlegt. Die Verbindung mit genau einer primären Aminogruppe wird im Ansatzbehälter (4) in Wasser gelöst vorgelegt. Das Einmischen des bifunktionellen Kettenreglers, des Phosphitstabilisators und der Verbindung mit einer primären Amino-gruppe in die Leitung (1) erfolgt über Mischelemente (5,5',5"). Nach der Polymerisation wird das erhaltene PA 6 über eine Schneidevorrichtung (7) zu Chips verarbeitet, welche anschließend im Extraktor (8) von anhaftendem Monomer und Oligomeren befreit werden. Anschließend werden die Chips im Trockner (9) getrocknet.

Figur 3 zeigt eine Vorrichtung zur zweistufigen Verfahrensführung. Im Unterschied zum einstufigen Verfahren werden das Caprolactam/Wasser-Gemisch und die Additive zunächst in einen Mischbehälter (10) eingespeist. Von dort wird das Gemisch in den Prepolymerisationsreaktor (11) eingeleitet und aus diesem wird das Prepolymerisat in das VK-Rohr (6) überführt.

### Bezugszeichenliste

(1) Leitung
(2) Ansatzbehälter für bifunktionellen Kettenregler
(3) Ansatzbehälter für Phosphitstabilisator
(4) Ansatzbehälter für Verbindung mit einer primären Aminogruppe
(5) Mischelement
(6) VK-Rohr
(7) Schneidevorrichtung
(8) Extraktor
(9) Trockner
(10) Mischbehälter
(11) Prepolymerisationsreaktor

Anhand der nachfolgenden Beispiele soll der erfindungsgemäße Gegenstand näher erläutert werden.

### Allgemeine Arbeitsvorschrift

In einem Autoklaven (5 Liter, Fa. Juchheim) wurden 3000 g Caprolactam und 5 Gew.-% demineralisiertes Wasser vorgelegt. Außerdem wurden jeweils die folgenden Mengen an Additiven bezogen auf die Gesamtmenge an Caprolactam-Monomer zugegeben.

| | |
|---|---|
| Terephthalsäure (BP Chembel N.V.): | 0.4 Gew.-% |
| 4-Amino-2,2,6,6-tetramethyl-piperidin (Merck): | 0.2 Gew.-% |
| Stabilisator: | 0.2 Gew.-% |

Terephthalsäure und der Stabilisator wurden dabei bei 90°C in Caprolactam gelöst und 4-Amino-2,2,6,6-tetramethyl-piperidin wurde in Wasser vorgelegt.

Nach Vorlage aller Rohstoffe wurde der Autoklav verschlossen und mit Stickstoff inertisiert. Unter einer Druckatmosphäre von 2,2 bar wurde das Reaktionsgemisch bis auf eine Temperatur von 240 °C unter Rühren aufgeheizt. Die Druckphase erstreckte sich über einen Zeitraum von 1,5 Stunden. Anschließend erfolgte die Entspannung über einen Zeitraum von 20 Minuten. Dabei wurden die aufsteigenden Brüden abgezogen und kondensiert. Auf diese Weise wurde das Wasser aus dem System entfernt. Atmosphärisch wurde bei Stickstoffüberlagerung und einer Produkttemperatur von 260 °C die Reaktion über weitere 5 Stunden fortgeführt. Am Ende der Reaktionszeit wurde die Schmelze mit Hilfe von Stickstoffüberdruck aus dem Autoklaven ausgetragen und sogleich in einem Wasserbad abgekühlt. Somit konnte ein kontinuierlicher Abzug der Schmelze erfolgen. Der erkaltete Polymerstrang wurde anschließend granuliert. Die so hergestellten Chips wurden in heißem Wasser extrahiert und getrocknet.

Für die Bestimmung der Thermostabilität wurden die getrockneten Chips pulverisiert, um eine möglichst große Oberfläche des Materials zu erzeugen. Teilmengen des Pulvers wurden dann im Umluftofen bei 190 °C über 5 und 10 Minuten einer heißen Luftatmosphäre ausgesetzt.

Die Messung der Farbwerte erfolgte nach DIN 5033 durch Reflexionsmessung mit einem Spektrophotometer (KonicaMinolta CM3500d) mit einer Messgeometrie d/8° (diffuse Beleuchtung / Beobachtungswinkel 8°). Die Farben wurden über die Tristimuluswerte X, Y und Z ermittelt und entweder in L*a*b*-Werte nach CIE oder Yellowness Index (YI) nach ASTM E313-96 umgerechnet. Für die Reflexionsmessungen wurden die getrockneten Granulate zunächst mit Trockeneis gekühlt und anschließend pulversiert. Die Faserproben wurden auf eine Länge von 5 mm zugeschnitten.

### Beispiel 1 (Vergleich)

Als Referenz für die Bewertung der Herstellung von PA 6 mittels hydrolytischer Polymerisation sowie der Stabilität gegen Hitze wurde die beschriebene allgemeine Arbeitsvorschrift ohne die Verwendung eines Stabilisators durchgeführt. Der gemessene Farbwert des extrahierten und getrockneten Granulats aus diesem Beispiel muss auch nach Zugabe eines Stabilisators erhalten bleiben. Trifft dies nicht zu, ist der gewählte Stabilisator nicht geeignet.

### Beispiel 2 (Vergleich)

Als Stabilisator wurde das phenolische Antioxidants N,N'-Hexan-1,6-diylbis[3-(3,5-di-tert-butyl-4-hydroxyphenylpropionamid], CAS-Nr. 2318-74-7, Handelsname Irganox^{®} 1098 (BASF SE) eingesetzt. Der Stabilisator und Terephthalsäure wurden dabei jeweils in einem separaten Behälter bei 90°C in Caprolactam vorgelegt.

Der beschriebenen allgemeinen Arbeitsvorschrift folgend, verlief der Syntheseschritt einwandfrei. Es konnte ein farblich neutrales Granulat erzeugt werden. Allerdings verfärbte sich das Granulat im Schritt der Heißwasserextraktion und zeigte eine deutliche Pinkfärbung. Der Versuch wurde daraufhin abgebrochen.

### Beispiel 3 (Vergleich)

Als Stabilisator wurde 3,3',3",5,5',5"-Hexa-tert-butyl-alpha,alpha',alpha"-(mesitylen-2,4,6-triyl)tri-p-kresol, CAS-Nr. 1709-70-2, Handelsname Irganox^{®} 1330 (BASF SE) verwendet. Der Stabilisator und Terephthalsäure wurden dabei jeweils in einem separaten Behälter bei 90°C in Caprolactam vorgelegt.

Hierbei zeigte sich bereits nach der Synthese, dass der abgezogene Polymerstrang vergilbt. Nach der Heißwasserextraktion blieb die Vergilbung in gleicher Art bestehen.

### Beispiel 4 (Erfindung)

Als Stabilisator wurde Tris(2,4-di-tert-butylphenyl)phosphit, CAS-Nr. 31570-04-4, Handelsname Irgafos^{®} 168 (BASF SE) verwendet. Die Struktur ist in Figur 1 dargestellt. Der Stabilisator und Terephthalsäure wurden dabei jeweils in einem separaten Behälter bei 90°C in Caprolactam vorgelegt.

Der Syntheseschritt nach der allgemeinen Arbeitsvorschrift verlief einwandfrei. Die Farbe des unextrahierten Granulats sowie des extrahierten und getrockneten Granulats blieb neutral.

### Beispiel 5 (Vergleich)

Als Stabilisator wurde das bereits in Beispiel 4 eingesetzte Irgafos^{®} 168 verwendet. Dabei wurden Terephthalsäure und Irgafos^{®} 168 gemeinsam in Caprolactam bei 90°C über Nacht vorgehalten. Die anschließende Ausführung der allgemeinen Arbeitsvorschrift führte bereits nach der Synthese zu einem vergilbten Material.

### Beispiel 6 (Erfindung)

In einem industriellen Test wurden 300 kg PA 6 ausgestattet mit dem Additivsystem nach Bespiel 4 im Hochgeschwindigkeitsspinnverfahren auf einen Einzeltiter von 0,8 dpf erfolgreich versponnen. Aus dem erzeugten Garn wurden textile Testgewebe erzeugt, die sich farblich gleichartig zur unstabilisierten Referenz verhalten, deren geringere Vergilbung bei Hitzeeinwirkung jedoch die verbesserte Stabilität belegt.

Die Resultate der Beispiele werden in untenstehender Tabelle 1 zusammengefasst. Tabelle 2 gibt Farbwerte nach Temperaturlagerung für die erfindungsgemäßen Beispiele 4 und 6 an, außerdem werden in Tabelle 3 die Farbwerte für Beispiel 5 direkt nach der Synthese angegeben.

Dem Vergleich von Beispiel 4 mit Beispiel 5 lässt sich entnehmen, dass das Vorlegen von Terephthalsäure und des Phosphitstabilisators in separaten Behältern wesentlich ist, um ein Granulat mit guten Farbeigenschaften zu erhalten. Weiterhin wird aus dem Vergleich der Beispiele 2 und 3 mit Beispiel 4 deutlich, dass phenolische Stabilisatoren nicht geeignet sind, um ein PA 6-Granulat mit guten Farbeigenschaften herzustellen.

**Tabelle 1: Übersicht der Beispiele.**

| **Zusammensetzung** | **B1** | **B2** | **B3** | **B4** | **B5^{a}** | **B6 (Faser aus B4)** |
|---|---|---|---|---|---|---|
| Caprolactam | 99.4 | 99.2 | 99.2 | 99.2 | 99.2 | 99.2 |
| Terephthalsäure | 0.4 | 0.4 | 0.4 | 0.4 | 0.4 | 0.4 |
| Triaceton-diamin | 0.2 | 0.2 | 0.2 | 0.2 | 0.2 | 0.2 |
| Irganox^{®} 1098 | - | 0.2 | - | - | - | - |
| Irganox^{®} 1030 | - | - | 0.2 | - | - | - |
| Irgafos^{®} 168 | - | - | - | 0.2 | 0.2 | 0.2 |
| **Bewertung der Farbe des Granulates bzw. der Faser** | Referenz | Pink-färbung | Vergilbung | neutrale Farbe | Vergilbung | Entspricht nach dem Verspinnen der Referenz |

| | | | | | | |
|---|---|---|---|---|---|---|
| a) Terephthalsäure und Irgafos^{®} 168 wurden im selben Behältnis in Caprolactam gelöst. | | | | | | |

**Tabelle 2: Farbwerte nach Lagerung im Umluftofen.**

| | Beispiel 1 | | | | Beispiel 4 | | | |
|---|---|---|---|---|---|---|---|---|
| | L* | a* | b* | YI | L* | a* | b* | YI |
| Referenzwert | 95,63 | -0,21 | 2,11 | 3,84 | 95,21 | -0,09 | 2,85 | 5,34 |
| 5 min bei 190°C | 94,08 | -0,87 | 6,33 | 11,26 | 94,35 | -0,42 | 4,62 | 8,44 |
| 10 min bei 190°C | 87,58 | 1,97 | 19,38 | 37,60 | 89,80 | 0,85 | 16,29 | 30,89 |

**Tabelle 3: Farbwerte nach der Synthese.**

| | L* | a* | b* | YI |
|---|---|---|---|---|
| Beispiel 5 | 95,21 | -0,14 | 3,22 | 6,01 |
| Beispiel 6 | 95,21 | -0,10 | 1,42 | 2,64 |

## Patentansprüche

1. Verfahren zur Herstellung von PA 6 durch hydrolytische Polymerisation von Caprolactam umfassend die folgenden Schritte:
i) Bereitstellen mindestens eines bifunktionellen Kettenlängenreglers gelöst in Caprolactam, wobei der mindestens eine bifunktionelle Kettenlängenregler ausgewählt ist aus der Gruppe bestehend aus aliphatischen Dicarbonsäuren und aromatischen Dicarbonsäuren;
ii) Bereitstellen mindestens eines Phosphitstabilisators gelöst in Caprolactam;
iii) Zugabe der in Schritt (i) und (ii) bereitgestellten Komponenten zu einer Mischung aus Wasser und Caprolactam;
iv) Zugabe mindestens einer Verbindung mit genau einer primären Amino-gruppe vor, während oder nach Schritt iii) zu der Mischung aus Wasser und Caprolactam, wobei die mindestens eine Verbindung mit genau einer primären Aminogruppe 4-Amino-2,2,6,6-tetramethyl-piperidin ist;
v) Polymerisation der Mischung zu PA 6;
wobei die in Schritt i) und ii) bereitgestellten Lösungen erst bei der Zugabe gemäß Schritt iii) miteinander vermischt werden.

2. Verfahren nach Anspruch 1, **dadurch gekennzeichnet, dass**
das Verfahren kontinuierlich durchgeführt wird.

3. Verfahren nach Anspruch 1 oder 2, **dadurch gekennzeichnet, dass**
der mindestens eine bifunktionelle Kettenlängenregler ausgewählt ist aus der Gruppe bestehend aus Phthalsäure, Isophthalsäure, Terephthalsäure und Mischungen davon, wobei Terephthalsäure bevorzugt ist; und/oder der mindestens eine Phosphitstabilisator bevorzugt ein organisches Phosphit ist, welches insbesondere ausgewählt ist aus der Gruppe bestehend aus Tris(nonylphenyl)phosphit, Tris(2,4-di-tert-butylphenyl)phosphit, 3,9-Bis(2,4-di-tert-butylphenoxy)-2,4,8,10-tetraoxa-3,9-diphosphaspiro[5.5]undecan und Mischungen davon, wobei Tris(2,4-di-tert-butylphenyl)phosphit bevorzugt ist;
wobei besonders bevorzugt Terephthalsäure und Tris(2,4-di-tert-butylphenyl)phosphit verwendet werden.

4. Verfahren nach einem der vorhergehenden Ansprüche, **dadurch gekennzeichnet, dass**
der mindestens eine bifunktionelle Kettenlängenregler in einer Menge im Bereich von 0.05 bis 1.0 mol-% und bevorzugt im Bereich von 0.1 bis 0.5 mol-% bezogen auf die Menge des eingesetzten Caprolactams eingesetzt wird; und/oder
der mindestens eine Phosphitstabilisator in einer Menge im Bereich von 0.01 bis 1.0 mol-% und bevorzugt im Bereich von 0.01 bis 0.05 mol-% bezogen auf die Menge des eingesetzten Caprolactams eingesetzt wird; und/oder
die mindestens eine Verbindung mit genau einer primären Amino-gruppe in einer Menge im Bereich von 0.01 bis 1.0 mol-% und bevorzugt im Bereich von 0.05 bis 0.5 mol-% bezogen auf die Menge des eingesetzten Caprolactams eingesetzt wird.

5. Verfahren nach einem der vorgehenden Ansprüche, **dadurch gekennzeichnet, dass**
die Zugabe der mindestens einen Verbindung mit genau einer Amino-gruppe nach der Zugabe des mindestens einen Phosphitstabilisators und nach der Zugabe des mindestens einen bifunktionellen Kettenreglers erfolgt.

6. Verfahren nach einem der vorhergehenden Ansprüche, **dadurch gekennzeichnet, dass**
das Verfahren einstufig durchgeführt wird, wobei
ein Caprolactam-Wasser Gemisch über eine Leitung (1) einem VK-Rohr (6) zugeführt wird und
der mindestens eine Phosphitstabilisator, der mindestens eine bifunktionelle Kettenregler und die mindestens eine Verbindung mit genau einer primären Aminogruppe in je einem Ansatzbehälter (2,3,4) vorgelegt werden und
diese der Leitung, über welche das Caprolactam-Wasser Gemisch in das VK-Rohr (6) eingespeist wird, in der Reihenfolge Phosphitstabilisator - bifunktioneller Kettenregler - Verbindung mit primärer Aminogruppe, zugeführt werden.

7. Verfahren nach einem der Ansprüche 1 bis 5, **dadurch gekennzeichnet, dass**
das Verfahren zweistufig durchgeführt wird, wobei
ein Caprolactam-Wasser Gemisch über eine Leitung einem Mischbehälter (10) zugeführt wird und
der mindestens eine Phosphitstabilisator, der mindestens eine bifunktionelle Kettenregler und die mindestens eine Verbindung mit genau einer primären Aminogruppe in je einem Ansatzbehälter (2,3,4) vorgelegt werden und
diese der Leitung, über welche das Caprolactam-Wasser Gemisch in den Mischbehälter (10) eingespeist wird, in der Reihenfolge Phosphitstabilisator - bifunktioneller Kettenregler - Verbindung mit primärer Aminogruppe, zugeführt werden und
die Mischung aus dem Mischbehälter (10) zunächst in einen Prepolymerisationsreaktor (11) geführt wird und das Prepolymerisat von dort in das VK-Rohr (6) geleitet wird.

8. Verfahren nach Anspruch 6 oder 7, **dadurch gekennzeichnet, dass**
die Einmischung des mindestens einen Phosphitstabilisators, des mindestens einen bifunktionellen Kettenreglers und der mindestens einen Verbindung mit genau einer primären Aminogruppe in die das Caprolactam-Wasser Gemisch führende Leitung über je ein Mischelement (5,5',5") vorgenommen wird, wobei dieses vorzugsweise nach dem Venturi-Prinzip arbeitet.

9. Verfahren nach einem der vorgehenden Ansprüche, **dadurch gekennzeichnet, dass**
Schritt v) bei einer Temperatur im Bereich von 225 bis 280°C, bevorzugt von 240 bis 270°C und besonders bevorzugt von 250 bis 265°C durchgeführt wird; und/oder
Schritt v) bei einstufiger Verfahrensführung bei einem absoluten Druck im VK-Rohr (6) im Bereich von 0.5 bis 1.2 bar, bevorzugt von 0.6 bis 1.1 bar und besonders bevorzugt von 0.7 bis 1.0 bar durchgeführt wird oder Schritt v) bei zweistufiger Verfahrensführung bei einem absoluten Druck im Prepolymerisationsreaktor (11) im Bereich von 1 bis 6 bar, bevorzugt von 2 bis 5 bar und besonders bevorzugt von 2.5 bis 4 bar und einem absoluten Druck im VK-Rohr (6) im Bereich von 0.5 bis 1.2 bar, bevorzugt von 0.6 bis 1.1 bar und besonders bevorzugt von 0.7 bis 1.0 bar durchgeführt wird; und/oder
Schritt v) durchgeführt wird bis das erhaltene PA 6 eine relative Viskosität im Bereich von 2.2 bis 3.0, bevorzugt von 2.4 bis 2.8 und besonders bevorzugt von 2.4 bis 2.7 aufweist.

10. Verfahren nach einem der vorhergehenden Ansprüche, **dadurch gekennzeichnet, dass**
der Yellow-Index des PA 6 nach Schritt v) im Bereich von 0.2 bis 5, bevorzugt von 0.5 bis 4 und besonders bevorzugt von 0.5 bis 3 liegt.

## Claims

1. Process for the preparation of PA 6 by hydrolytic polymerization of caprolactam comprising the following steps:
(i) providing at least one bifunctional chain length regulator dissolved in caprolactam, wherein the at least one bifunctional chain length regulator is selected from the group consisting of aliphatic dicarboxylic acids and aromatic dicarboxylic acids;
ii) providing at least one phosphite stabilizer dissolved in caprolactam;
iii) adding the components provided in steps (i) and (ii) to a mixture of water and caprolactam;
iv) adding at least one compound having exactly one primary amino group before, during or after step iii) to the mixture of water and caprolactam, wherein the at least one compound having exactly one primary amino group is 4-amino-2,2,6,6-tetramethyl-piperidine;
v) polymerizing the mixture to PA 6;
wherein the solutions provided in step i) and ii) are mixed with each other only upon addition according to step iii).

2. Process according to claim 1, **characterized in that**
the process is carried out continuously.

3. Process according to claim 1 or 2, **characterized in that**
the at least one bifunctional chain length regulator is selected from the group consisting of phthalic acid, isophthalic acid, terephthalic acid and mixtures thereof, terephthalic acid being preferred; and/or
said at least one phosphite stabilizer is preferably an organic phosphite selected in particular from the group consisting of tris(nonylphenyl)phosphite, tris(2,4-di-tert-butylphenyl)phosphite, 3,9-bis(2,4-di-tert-butylphenoxy)-2,4,8,10-tetraoxa-3,9-diphosphaspiro[5.5]undecane and mixtures thereof, wherein tris(2,4-di-tert-butylphenyl)phosphite is preferred;
wherein terephthalic acid and tris(2,4-di-tert-butylphenyl)phosphite are particularly preferred.

4. Process according to any one of the preceding claims, **characterized in that**
the at least one bifunctional chain length regulator is used in an amount in the range from 0.05 to 1.0 mol% and preferably in the range from 0.1 to 0.5 mol% based on the amount of caprolactam used; and/or
the at least one phosphite stabilizer is used in an amount in the range from 0.01 to 1.0 mol% and preferably in the range from 0.01 to 0.05 mol%, based on the amount of caprolactam used; and/or
the at least one compound having exactly one primary amino group is employed in an amount in the range from 0.01 to 1.0 mol% and preferably in the range from 0.05 to 0.5 mol%, based on the amount of caprolactam employed.

5. Process according to one of the preceding claims, **characterized in that**
the addition of the at least one compound having exactly one amino group takes place after the addition of the at least one phosphite stabilizer and after the addition of the at least one bifunctional chain length regulator.

6. Process according to any one of the preceding claims, **characterized in that**
the process is carried out in a single step, wherein
a caprolactam-water mixture is fed via a line (1) to a VK tube (6) and
the at least one phosphite stabilizer, the at least one bifunctional chain length regulator and the at least one compound having exactly one primary amino group are each introduced into a preparation vessel (2, 3, 4), and
these are fed in the order phosphite stabilizer - bifunctional chain length regulator - compound with primary amino group to the line via which the caprolactam-water mixture is fed into the VK tube (6).

7. Process according to any one of claims 1 to 5, **characterized in that**
the process is carried out in two stages, wherein
a caprolactam-water mixture is fed via a line to a mixing vessel (10) and
the at least one phosphite stabilizer, the at least one bifunctional chain length regulator and the at least one compound having exactly one primary amino group are each introduced into a preparation vessel (2, 3, 4), and
these are fed in the order phosphite stabilizer - bifunctional chain regulator - compound with primary amino group to the line via which the caprolactam-water mixture is fed into the mixing vessel (10), and
the mixture from the mixing vessel (10) is first fed into a prepolymerization reactor (11) and the prepolymer is passed from there into the VK tube (6).

8. Process according to claim 6 or 7, **characterized in that**
the mixing of the at least one phosphite stabilizer, the at least one bifunctional chain regulator and the at least one compound having exactly one primary amino group into the line carrying the caprolactam-water mixture is carried out via a respective mixing element (5, 5', 5"), the latter preferably operating according to the Venturi principle.

9. Process according to one of the preceding claims, **characterized in that**
Step v) is carried out at a temperature in the range from 225 to 280°C, preferably from 240 to 270°C and particularly preferably from 250 to 265°C; and/or
step v) is carried out in a single-stage process at an absolute pressure in the VK tube (6) in the range from 0.5 to 1.2 bar, preferably from 0.6 to 1.1 bar and more preferably from 0.7 to 1. 0 bar, or step v) is carried out in a two-stage process at an absolute pressure in the prepolymerization reactor (11) in the range from 1 to 6 bar, preferably from 2 to 5 bar and particularly preferably from 2.5 to 4 bar, and an absolute pressure in the VK tube (6) in the range from 0.5 to 1.2 bar, preferably from 0.6 to 1.1 bar and particularly preferably from 0.7 to 1.0 bar; and/or
step v) is carried out until the PA 6 obtained has a relative viscosity in the range from 2.2 to 3.0, preferably from 2.4 to 2.8 and particularly preferably from 2.4 to 2.7.

10. Process according to one of the preceding claims, **characterized in that**
the yellow index of the PA 6 after step v) is in the range from 0.2 to 5, preferably from 0.5 to 4 and particularly preferably from 0.5 to 5.

## Revendications

1. Procédé de préparation de PA 6 par polymérisation hydrolytique de caprolactame comprenant les étapes suivantes :
i) fournir au moins un régulateur de longueur de chaîne bifonctionnel dissous dans le caprolactame, ledit au moins un régulateur de longueur de chaîne bifonctionnel étant choisi dans le groupe constitué par les acides dicarboxyliques aliphatiques et les acides dicarboxyliques aromatiques ;
ii) mise à disposition d'au moins un stabilisateur de phosphite dissous dans du caprolactame ;
iii) ajouter les composants fournis dans les étapes (i) et (ii) à un mélange d'eau et de caprolactame ;
iv) l'addition d'au moins un composé ayant exactement un groupe amino primaire avant, pendant ou après l'étape iii) au mélange d'eau et de caprolactame, ledit au moins un composé ayant exactement un groupe amino primaire étant la 4-amino-2,2,6,6-tétraméthyl-pipéridine ;
v) polymérisation du mélange en PA 6 ;
les solutions préparées dans les étapes i) et ii) n'étant mélangées entre elles que lors de l'addition selon l'étape iii).

2. Procédé selon la revendication 1, **caractérisé en ce que**
le procédé est mis en oeuvre en continu.

3. Procédé selon la revendication 1 ou 2, **caractérisé en ce que**
le au moins un régulateur de longueur de chaîne bifonctionnel est choisi dans le groupe constitué par l'acide phtalique, l'acide isophtalique, l'acide téréphtalique et leurs mélanges, l'acide téréphtalique étant préféré ; et/ou
le au moins un stabilisant phosphite est de préférence un phosphite organique, qui est en particulier choisi dans le groupe constitué par le phosphite de tris(nonylphényle), le phosphite de tris(2,4-di-tert-butylphényle), le 3,9-bis(2,4-di-tert-butylphénoxy)-2,4,8,10-tétraoxa-3,9-diphosphaspiro[5.5]undécane et leurs mélanges, le phosphite de tris(2,4-di-tert-butylphényle) étant préféré ;
l'acide téréphtalique et le phosphite de tris(2,4-di-tert-butylphényle) étant particulièrement préférés.

4. Procédé selon l'une quelconque des revendications précédentes, **caractérisé en ce que**
le au moins un régulateur de longueur de chaîne bifonctionnel est utilisé en une quantité de l'ordre de 0,05 à 1,0 % en moles et de préférence de l'ordre de 0,1 à 0,5 % en moles par rapport à la quantité de caprolactame utilisée ; et/ou
le au moins un stabilisant de phosphite est utilisé en une quantité dans la plage de 0,01 à 1,0 % en moles et de préférence dans la plage de 0,01 à 0,05 % en moles par rapport à la quantité de caprolactame utilisée ; et/ou
le au moins un composé avec exactement un groupe amino primaire est utilisé en une quantité dans la plage de 0,01 à 1,0 % en moles et de préférence dans la plage de 0,05 à 0,5 % en moles par rapport à la quantité de caprolactame utilisée.

5. Procédé selon l'une quelconque des revendications précédentes, **caractérisé en ce que**
l'addition d'au moins un composé ayant exactement un groupe amino a lieu après l'addition d'au moins un stabilisateur de phosphite et après l'addition d'au moins un régulateur de chaîne bifonctionnel.

6. Procédé selon l'une des revendications précédentes, **caractérisé en ce que**
le procédé est mis en oeuvre en une seule étape, dans laquelle
un mélange caprolactame-eau est acheminé par une conduite (1) vers un tube VK (6), et
l'au moins un stabilisateur de phosphite, l'au moins un régulateur de cétène bifonctionnel et l'au moins un composé avec exactement un groupe amino primaire sont présentés dans un récipient de préparation (2, 3, 4) respectif et
ceux-ci sont amenés à la conduite par laquelle le mélange caprolactame-eau est alimenté dans le tube VK (6), dans l'ordre suivant : stabilisateur de phosphite - régulateur de cétène bifonctionnel - composé avec groupe amino primaire.

7. Procédé selon l'une des revendications 1 à 5, **caractérisé en ce que**
le procédé est mis en oeuvre en deux étapes, dans lesquelles
un mélange caprolactame-eau est introduit par une conduite dans un récipient de mélange (10) et
l'au moins un stabilisateur de phosphite, l'au moins un régulateur de cétène bifonctionnel et l'au moins un composé avec exactement un groupe amino primaire sont présentés chacun dans un récipient de préparation (2, 3, 4), et
ceux-ci sont amenés à la conduite par laquelle le mélange caprolactame-eau est alimenté dans le récipient de mélange (10), dans l'ordre suivant : stabilisateur de phosphite - régulateur de chaîne bifonctionnel - composé avec groupe amino primaire et
le mélange est d'abord amené du récipient de mélange (10) dans un réacteur de prépolymérisation (11) et le prépolymère est amené de là dans le tube VK (6).

8. Procédé selon la revendication 6 ou 7, **caractérisé en ce que**
le mélange d'au moins un stabilisateur de phosphite, d'au moins un régulateur de chaîne bifonctionnel et d'au moins un composé avec exactement un groupe amino primaire dans le conduit conduisant le mélange caprolactame-eau est effectué par un élément mélangeur (5, 5', 5"), celui-ci fonctionnant de préférence selon le principe de Venturi.

9. Procédé selon l'une des revendications précédentes, **caractérisé en ce que**
l'étape v) est réalisée à une température comprise entre 225 et 280°C, de préférence entre 240 et 270°C et de manière particulièrement préférée entre 250 et 265°C ; et/ou
l'étape v) est réalisée en une seule étape à une pression absolue dans le tube VK (6) comprise entre 0,5 et 1,2 bar, de préférence entre 0,6 et 1,1 bar et de manière particulièrement préférée entre 0,7 et 1. 0 bar, ou l'étape v) est réalisée dans le cas d'un procédé en deux étapes, à une pression absolue dans le réacteur de prépolymérisation (11) comprise entre 1 et 6 bar, de préférence entre 2 et 5 bar et de manière particulièrement préférée entre 2,5 et 4 bar, et à une pression absolue dans le tube VK (6) comprise entre 0,5 et 1,2 bar, de préférence entre 0,6 et 1,1 bar et de manière particulièrement préférée entre 0,7 et 1,0 bar ; et/ou
l'étape v) est réalisée jusqu'à ce que le PA 6 obtenu présente une viscosité relative dans la plage de 2,2 à 3,0, de préférence de 2,4 à 2,8 et de manière particulièrement préférée de 2,4 à 2,7.

10. Procédé selon l'une quelconque des revendications précédentes, **caractérisé en ce que**
l'indice de jaune du PA 6 après l'étape v) se situe dans la plage de 0,2 à 5, de préférence de 0,5 à 4 et de manière particulièrement préférée de 0,5 à 3.
